# FASCICULE DE BREVET EUROPEEN

(11) **EP 2 916 410 B1**
(45) Date de publication et mention de la délivrance du brevet: **14.10.2020**
(21) Numéro de dépôt: 15157727.7
(22) Date de dépôt: 05.03.2015
(51) Int. Cl.: H02G 5/00

(54) **Système de distribution d'énergie électrique triphasée doté d'un moyen de guidage d'arcs électriques**
Drehstrom-Verteilungssystem, das mit einem Führungsmittel für elektrische Lichtbögen ausgestattet ist
Three-phase electrical power distribution system provided with a means for guiding electric arcs

(30) Priorité: 07.03.2014 FR 1451860
(43) Date de publication de la demande: 09.09.2015
(73) Titulaire: Zodiac Aero Electric, 93100 Montreuil (FR)
(72) Inventeur: Andreoletti, Rémi, 77500 CHELLES (FR)
(74) Mandataire: Casalonga

(56) Documents cités:
- DE-A1- 1 440 757
- DE-A1- 4 328 241
- DE-B- 1 191 458
- DE-B- 1 229 613
- US-A- 3 004 096
- US-A- 3 099 504
- US-A- 3 345 455

## Description

L'invention concerne, de manière générale, les systèmes de distribution d'énergie électrique triphasée et, en particulier, les systèmes de distribution d'énergie électrique dotés de barres de distribution de courant.

Une application particulièrement intéressante de l'invention concerne les systèmes de distribution d'énergie électrique fondés sur l'utilisation de barres de distribution de courant prévues dans des armoires ou cœurs de distribution d'énergie électrique d'aéronefs.

Toutefois, l'invention s'applique également aux systèmes de distribution d'énergie électrique triphasée dans tous types d'équipement, notamment dans des batteries, des convertisseurs, par exemple AC/DC, ...

Comme on le sait, un réseau de distribution d'énergie électrique au sein d'un aéronef a une structure pyramidale.

La puissance électrique est tout d'abord produite en utilisant une partie de la puissance fournie par les moteurs de l'aéronef pour entraîner des générateurs d'énergie électrique. L'énergie électrique générée est fournie à des armoires de distribution, également désignées par le terme de « cœurs » de distribution, pour être ensuite redistribuée soit vers des charges, soit vers des boîtiers de distribution secondaires, à des ampérages différents. Des barres de distribution électrique triphasées, également connues sous le terme de « busbars », sont utilisées pour véhiculer les courants au sein de l'armoire de distribution. Les puissances véhiculées au sein de l'armoire sont relativement importantes. Elles peuvent atteindre des valeurs de l'ordre du mégawatt.

La section des barres de distribution détermine le courant maximum qui peut circuler avec sécurité dans les barres.

Chaque armoire de distribution primaire ou secondaire intègre des composants de distribution, dont certains ont pour fonction de commuter l'énergie vers une barre de distribution primaire, comme c'est le cas pour les contacteurs de ligne, vers des charges électriques à bord de l'aéronef ou encore vers des sous-réseaux de distribution secondaires qui redistribuent de nouveau l'énergie vers des charges de moindre puissance. D'autres composants de distribution ont pour fonction de protéger le réseau en cas notamment de défauts électriques, tel qu'un court-circuit.

Systématiquement, chaque câble qui sort d'une armoire de distribution pour distribuer l'énergie électrique est protégé soit par un disjoncteur, soit par un fusible, soit par un contacteur-disjoncteur. Le fonctionnement de ces composants est déclenché à partir d'une surcharge de courant. Le temps de déclenchement est inversement proportionnel au courant de surcharge.

L'élément de commutation le plus en amont, c'est-à-dire le plus proche de la source électrique, est constitué par le contacteur de ligne. La protection la plus en amont du réseau électrique est par conséquent celle qui contrôle le générateur et commande le contacteur de ligne. Cette protection est basée sur une mesure du courant afin d'identifier une surcharge et d'isoler le défaut si aucune autre protection en aval n'a pu le faire, prouvant par conséquent que le défaut est situé au niveau du réseau primaire, entre le contacteur de ligne et les dispositifs de protection situés en aval. La protection prévue au niveau du réseau primaire ne peut être déclenchée qu'après une durée suffisante pour que les protections situées en aval puissent fonctionner dans le cas où le défaut serait situé à leur niveau. Cette durée de déclenchement peut être aujourd'hui au maximum de 5 secondes, ce qui est suffisamment long pour provoquer des dommages.

Ainsi, la protection prévue au niveau du générateur et du contacteur de ligne est la plus longue à mettre en œuvre. De ce fait, un défaut apparaissant directement en aval, sur le réseau primaire pourra, compte tenu du temps de déclenchement de cette protection, provoquer des dégâts avant d'être isolé.

On notera par ailleurs que l'ensemble des dispositifs de protection prévus dans les armoires de distribution primaire ou secondaire ne permettent pas d'assurer une protection contre tous les types de défauts susceptibles d'être rencontrés dans un cœur électrique.

Bien qu'elles soient efficaces pour couvrir des défauts tels que des sur-courants ou des courts-circuits, certains types de courts-circuits ne sont toutefois pas couverts par ces protections.

Par exemple, des objets métalliques (tournevis, écrous, etc...) laissés par erreur dans une armoire électrique lors d'une opération de maintenance, sont susceptibles de provoquer des courts-circuits lorsqu'ils entrent en contact avec les barres de distribution électrique. De tels courts-circuits ne seront pas vus par les dispositifs de protection du réseau primaire et sont susceptibles de provoquer l'apparition d'arcs électriques susceptibles de se propager le long des barres de distribution et de provoquer des dégâts importants susceptibles de compromettre la sécurité de l'aéronef.

L'effet destructeur d'un arc n'apparaît toutefois que lorsque l'arc est ralenti. Dans ce cas, il ronge le métal des barres de distribution en projetant du métal en fusion autour de lui. Tel est également le cas lorsqu'il rencontre un obstacle, qu'il soit métallique ou isolant.

Il a en effet été constaté qu'un arc électrique qui se propage sur des barres de distribution a généralement une hauteur de l'ordre de 2 à 3cm, pour des valeurs de courant, de fréquence et de tension dans le domaine de l'aéronautique. C'est la raison pour laquelle il est nécessaire de prévoir dans les armoires de distribution une zone de sûreté d'environ 3 à 4cm autour des barres de distribution pour éviter qu'un arc électrique qui se propage sur les barres ne vienne accrocher un élément métallique de l'armoire, ce qui peut s'avérer contraignant.

On pourra se référer au document U 3 099 504 qui décrit des barres de distribution dotées de bandes isolantes, ou aux documents US 3 004 096 et DE 1 440 757, qui présentent des barres isolées comportant des zones de connexion en regard dépourvues d'isolant.

Au vu de ce qui précède, le but de l'invention est de proposer un système de distribution d'énergie électrique triphasée capable d'imposer une trajectoire à l'arc, une fois créé, et de modifier sa forme afin, notamment, de le confiner dans un volume restreint.

L'invention a donc pour objet, selon un premier aspect, un système de distribution d'énergie électrique triphasée, comprenant un ensemble de barres de distribution de courant s'étendant côte à côte et revêtues d'un isolant, dans lequel les barres comportent des zones en regard dépourvues d'isolant, comme défini plus en détail dans la revendication 1.

Il a été constaté qu'en prévoyant des zones d'épargne dépourvues d'isolant dans les barres de distribution de courant, on crée localement des zones de guidages des arcs permettant en outre de limiter latéralement et verticalement l'effet des arcs électriques en les confinant entre les barres.

En effet, dans les modes de réalisation, le motif des zones dépourvues d'isolant est adapté pour que lesdites zones constituent des moyens de guidage d'un arc électrique susceptible de se propager le long des barres.

Par exemple, les zones dépourvues d'isolant forment des bandes longitudinales électriquement conductrices.

Dans un mode de réalisation, le système comporte trois barres de distribution d'énergie électrique triphasée s'étendant côte à côte, la barre médiane comprenant des faces latérales tournées vers les barres latérales comprenant chacune au moins une zone dépourvue d'isolant et la face latérale des barres latérales tournées vers la barre médiane comprenant au moins une zone correspondante dépourvue d'isolant.

L'invention a également pour objet, selon un deuxième aspect, un système comprenant un dispositif de piégeage d'arcs électriques se propageant sur un système de distribution d'énergie électrique triphasée tel que défini ci-dessus, comprenant une enceinte délimitant intérieurement une cavité de piégeage et comprenant une face antérieure par laquelle un arc se propageant dans les barres de distribution le long des zones en regard dépourvues d'isolant est introduit dans la cavité, une paroi périphérique et une paroi postérieure dotée de passages pour les barres de distribution.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre l'architecture générale d'un réseau de distribution d'énergie électrique embarqué à bord d'un aéronef ;
- la figure 2 est une vue latérale montrant l'une des faces des barres de distribution d'un système de distribution d'énergie électrique conforme à l'invention ;
- la figure 3 est une vue latérale de l'autre face des barres de distribution de courant ;
- les figures 4a et 4b montrent la propagation d'un arc sur des barres de distribution de courant non isolées et selon l'invention, respectivement ; et
- la figure 5 est une vue d'un système de piégeage d'arcs électriques conforme à l'invention.

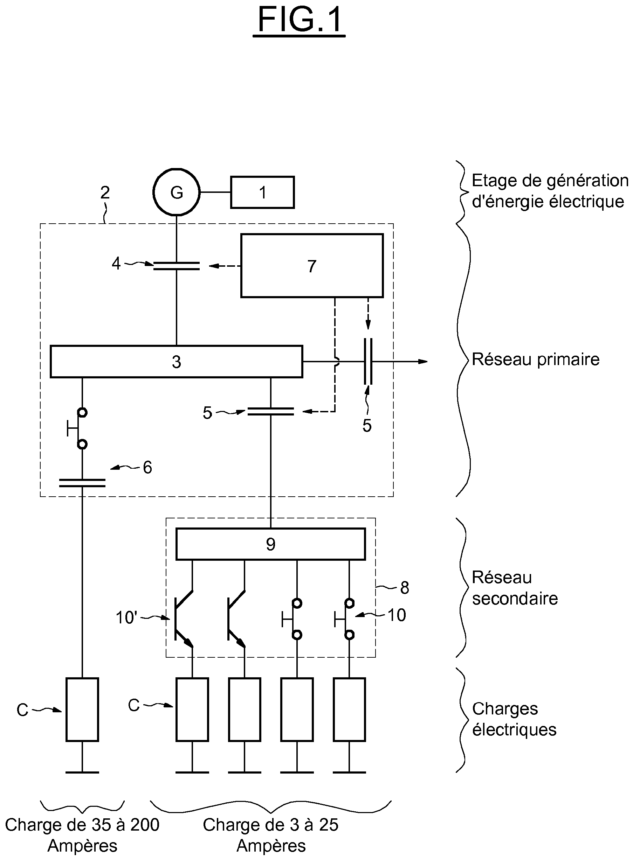

On se référera tout d'abord à la figure 1 qui illustre l'architecture générale d'un réseau de distribution d'énergie électrique pour aéronef.

Le réseau comporte tout d'abord un étage de génération d'énergie électrique comprenant un générateur G, associé à un contrôleur 1, qui utilise une partie de la puissance fournie par les moteurs de l'aéronef pour délivrer une énergie électrique, laquelle est délivrée à un réseau primaire, à un réseau secondaire et à des charges électriques.

Le réseau primaire comporte essentiellement une armoire ou cœur de distribution 2 dans laquelle sont prévues des barres 3 de distribution de courant triphasé qui reçoivent l'énergie électrique délivrée par le générateur par l'intermédiaire d'un contacteur de lignes 4 et qui redistribuent l'énergie électrique vers un autre réseau primaire ou vers le réseau secondaire ou encore directement vers les charges par l'intermédiaire de contacteurs 5 respectifs ou d'un contacteur-disjoncteur 6 commandés par un dispositif 7 de contrôle des contacteurs.

Le réseau secondaire, quant à lui, comprend également une armoire 8 de distribution secondaire comprenant également des barres 9 de distribution de courant triphasé alimentant directement les charges C par l'intermédiaire de contacteurs 10 ou d'interrupteurs 10'. Par exemple, et comme illustré sur la figure 1, des charges alimentées à des intensités comprises entre 35 et 200 ampères sont directement alimentées par l'armoire de distribution primaire 2, tandis que des charges électriques C alimentées par des courants d'intensité comprise entre 3 et 25 ampères sont raccordées à l'armoire de distribution secondaire 8.

Indiqué précédemment, il peut arriver que des objets métalliques laissés par erreur dans une armoire de distribution, et en particulier dans l'armoire de distribution primaire 2, entrent en contact avec les barres de distribution primaire et génèrent de la sorte des courts-circuits qui ne sont pas détectés et pris en compte par les dispositifs de protection du réseau primaire.

De tels courts-circuits sont susceptibles de provoquer des arcs électriques qui se propagent dans les barres de distribution et dans l'armoire de distribution et provoquent des dégâts relativement importants.

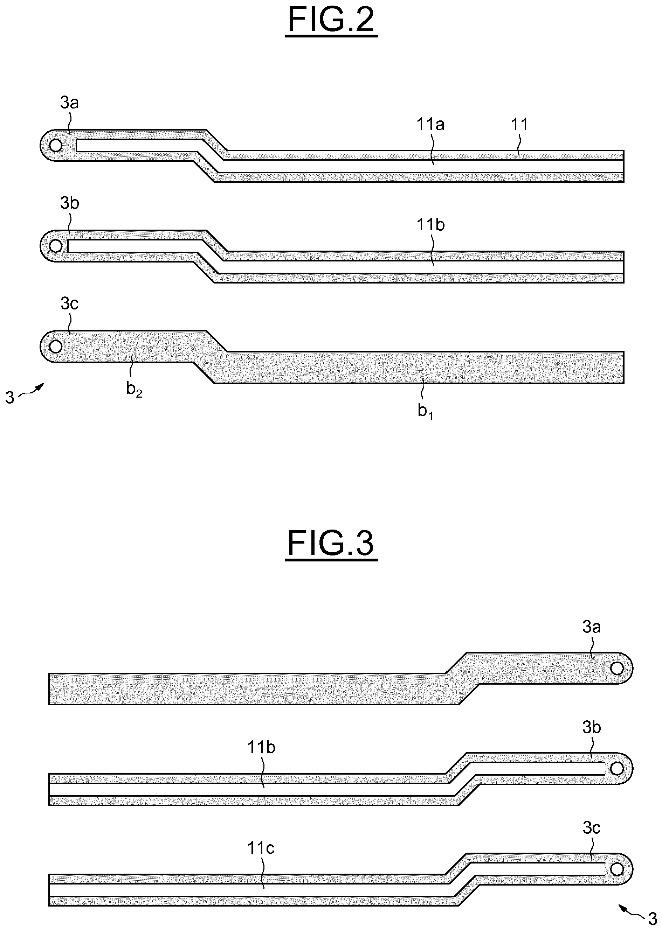

En se référant aux figures 2 et 3, une barre de distribution de courant est réalisée à partir d'un matériau électriquement conducteur, notamment en métal. Pour la distribution d'une énergie électrique triphasée, on utilise trois barres de distribution de courant 3a, 3b et 3c disposées côte à côte, à savoir deux barres latérales 3a et 3c et une barre médiane 3b.

Par exemple, chaque barre comporte une première branche b1, assurant la conduction électrique proprement dite du courant, et une deuxième branche b2 ici désaxée par rapport à la première branche et assurant la conduction électrique du courant ainsi que la fixation mécanique de la barre.

On voit par ailleurs sur les figures 2 et 3 que chaque barre 3a, 3b et 3c est revêtue d'un isolant 11. Il s'agit avantageusement d'un isolant non organique, par exemple l'isolant commercialisé sous la dénomination Interpon®, du Rilsan®, ou un isolant en nylon.

L'isolant 11 s'étend le long de la première branche b1 et de la deuxième branche b2.

Toutefois, ces branches b1 et b2 comportent une zone 11-a, 11-b et 11-c dépourvue d'isolant et prévue sur les faces en regard des barres 3a, 3b et 3c.

Ainsi, la face des barres latérales 11a et 11c tournée vers la barre médiane 11b comporte une zone 11a et 11c dépourvue d'isolant tandis que les faces mutuellement opposées de la barre médiane 3b sont chacune dotées d'une zone 11b dépourvue d'isolant.

Dans l'exemple de réalisation illustré sur les figures 2 et 3, les zones 11a, 11b et 11c dépourvues d'isolant sont réalisées sous la forme d'une bande longitudinale délimitant un rail électriquement conducteur dans les barres.

Ainsi, un arc créé dans un système de distribution d'énergie électrique n'est susceptible de se propager qu'à l'endroit des zones électriquement conductrices dépourvues d'isolant et n'est pas en mesure de se propager dans les zones isolées.

L'arc électrique est dès lors localisé et confiné dans des zones inter-barres.

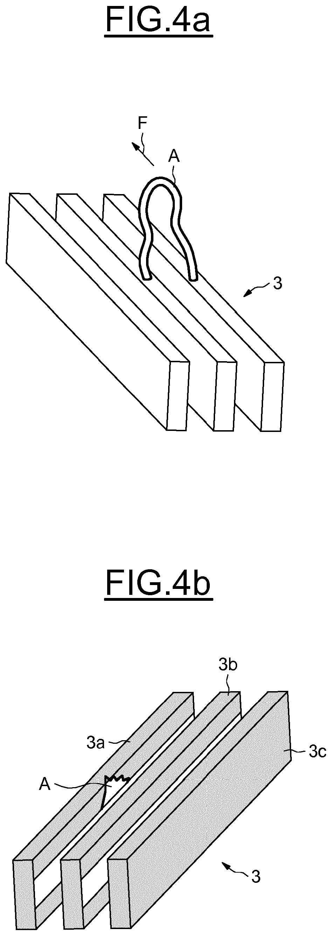

En se référant à la figure 4a, un arc électrique qui se propage le long d'une barre de distribution non isolée suit la loi de Laplace et se déplace dès lors uniquement dans le sens de propagation des charges (flèche F). Dans des barres de distribution non isolées, on voit sur la figure 4a que l'arc électrique A a une forme de U inversé et se propage plus particulièrement au-dessus des barres. L'arc électrique A qui se propage en saillie est susceptible d'atteindre des zones métalliques du cœur de distribution électrique.

Au contraire, en se référant à la figure 4b, en prévoyant des zones électriquement conductrices le long de la zone centrale des barres de distribution, on canalise les arcs entre les barres de distribution, l'arc adoptant une forme de sphère qui est localisée dans la zone centrale des barres de distribution et qui ne peut plus accrocher d'élément métallique à proximité.

Comme indiqué précédemment, il a à cet égard été constaté qu'à bord d'un aéronef et en particulier pour des valeurs de courant rencontrées à bord des aéronefs, la hauteur d'un arc électrique se propageant le long de barres non isolées est de l'ordre de 2-3 cm. Au contraire, pour des barres de distribution isolées mais dotées de zones dépourvues d'isolant et ayant une hauteur de 15 mm, l'arc sphérique ne dépasse pas des barres ou ne dépasse que de quelques millimètres au dessus des barres, limitant dès lors les risques que l'arc ne vienne en contact avec des éléments métalliques du cœur de distribution électrique.

On notera par ailleurs que lorsque l'arc électrique rencontre un obstacle, son comportement entre les barres provoque un rognage de ces dernières, jusqu'à leur sectionnement, ce qui assure dès lors la fonction de fusible.

En confinant les arcs électriques entre les barres, la section des barres de distribution de courant est nette et on limite la projection de métal en fusion.

Ainsi, grâce à l'invention, on peut rapprocher des barres de distribution les éléments métalliques du cœur de distribution sans risquer qu'un arc ne vienne en contact avec ces zones métalliques lorsque l'arc se déplace ou lorsque celui-ci est arrêté par un obstacle.

Dans l'exemple de réalisation qui vient d'être décrit, les zones conductrices des barres de distribution sont réalisées sous la forme de bandes longitudinales électriquement conductrices.

Il serait également possible, en variante, de prévoir des zones électriquement conductrices de toute autre forme, par exemple en damier ou localement interrompues en prévoyant des inserts isolants de manière à prévoir un affaiblissement de l'arc lors de son déplacement le long des barres.

On notera par ailleurs que l'invention qui vient d'être décrite, qui prévoit des rails de propagation des arcs le long des barres, est particulièrement adaptée pour guider les arcs vers des dispositifs de piégeage d'arcs électriques.

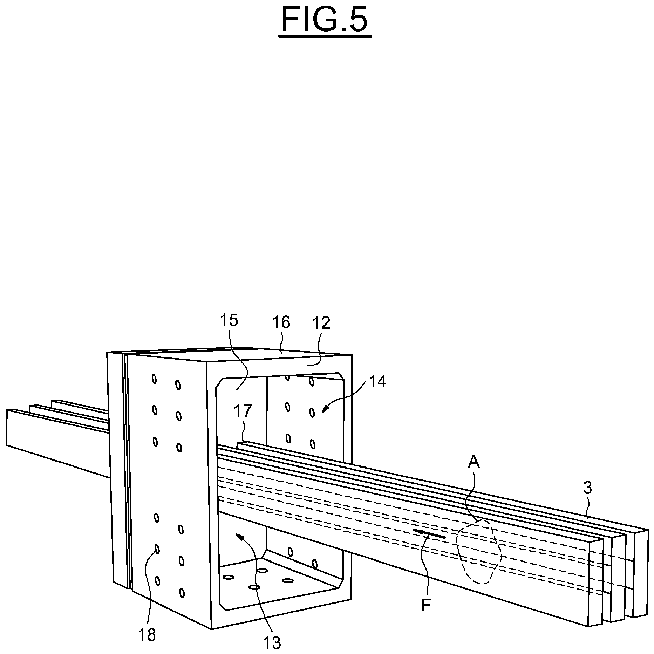

On a représenté sur la figure 5 un dispositif de piégeage permettant de bloquer et étouffer les arcs, tout en empêchant leur propagation.

Comme on le voit sur cette figure 5, un tel dispositif de piégeage comprend une enceinte 12 traversée par les barres de distribution de courant, ici les barres de distribution primaire 3.

L'enceinte 12 délimite intérieurement une cavité 13 de piégeage des arcs électriques A.

En considérant la direction de propagation des arcs électriques entre les barres 3 (Flèche F), qui suivent la loi de Laplace et qui se déplacent dès lors uniquement dans le sens de propagation des charges, l'enceinte 12 comporte une face antérieure 14 ouverte par laquelle l'arc A pénètre dans la cavité 13, une paroi postérieure 15 opposée à la face antérieure 14, et une paroi périphérique 16.

L'enceinte 12 est traversée par les barres triphasées 3. Ainsi, la paroi postérieure 15 est dotée de trois passages tels que 17 pour les barres 3.

On voit par ailleurs sur la figure 5 que l'enceinte 12 a ici une forme générale parallélépipédique. Bien entendu, d'autres formes peuvent être envisagées sans sortir du cadre de l'invention. Ainsi, la paroi postérieure de fond 15 est ici rectangulaire, la paroi périphérique 16 étant formée par un ensemble de quatre côtés s'étendant axialement à partir de la paroi périphérique de fond 15. L'ensemble est réalisé en une pièce, en un matériau non métallique, isolant, par exemple en résine époxy.

Ainsi, lorsque l'arc électrique, qui est confiné dans la zone située entre les barres et qui ne peut se propager que dans le sens de déplacement des charges le long des barres 3 atteint la cavité 13, il entre en contact avec la paroi postérieure 15 de fond de la cavité, sans pouvoir reculer ni s'échapper par les parois latérales périphériques.

Comme on le voit, l'enceinte est percée d'un ensemble de trous, tels que 18, pratiqués par exemple dans la paroi périphérique 16 et/ou dans la paroi postérieure 15 afin d'assurer une évacuation progressive du plasma sans mener à sa recomposition.

De tels trous 18 sont optionnels en particulier lorsque les zones dépourvues d'isolant sont configurées pour affaiblir l'arc. Leur présence reste avantageuse pour obtenir un étouffement de l'arc. Bien que de tels trous puissent être réalisés soit sur la paroi périphérique, soit sur la paroi postérieure de l'enceinte, soit sur la paroi périphérique et sur la paroi postérieure 15, leur réalisation dans la paroi postérieure est avantageuse dans la mesure où la pression du gaz est plus importante dans cette zone.

On notera par ailleurs que le diamètre des trous 18 doit être choisi de manière à permettre une évacuation progressive du plasma, tout en évitant sa recomposition à l'extérieur.

On choisira par exemple un diamètre de trous 18 compris entre 2 mm et 3 mm. On pourra également prévoir de les espacer d'une distance comprise entre 5 et 6 mm, par exemple pour des trous de 3 mm.

## Revendications

1. Système de distribution d'énergie électrique triphasée, comprenant un ensemble de barres (3) de distribution de courant s'étendant côte à côte et revêtues d'un isolant, les barres comportant des zones (11a, 11b, 11c) en regard dépourvues d'isolant. **caractérisé en ce que** le motif des zones dépourvues d'isolant est adapté pour que lesdites zones constituent des moyens de guidage d'un arc électrique (A) susceptible de se propager le long des barres.

2. Système selon la revendication 1, dans lequel les zones dépourvues d'isolant forment des bandes longitudinales électriquement conductrices.

3. Système selon l'une des revendications 1 à 2, comprenant trois barres (3a, 3b, 3c) de distribution d'énergie électrique triphasée s'étendant côte à côte, la barre médiane (3b) comprenant des faces latérales tournées vers les barres latérales (3a, 3c) comprenant chacune au moins une zone dépourvue d'isolant et la face latérale des barres latérales tournées vers la barre médiane ayant au moins une zone correspondante dépourvue d'isolant.

4. Système selon l'une quelconque des revendications 1 à 3, comprenant un dispositif de piégeage d'arcs électriques se propageant sur le système, **caractérisé en ce qu'**il comporte une enceinte (12) délimitant intérieurement une cavité (13) de piégeage et comprenant une face antérieure (14) par laquelle un arc se propageant dans les barres de distribution et guidé le long des zones en regard dépourvues d'isolant est introduit dans la cavité, une paroi périphérique (16), une paroi postérieure (15) dotée de passages pour les barres de distribution.

## Patentansprüche

1. System zur Verteilung von dreiphasiger elektrischer Energie, das einen Satz von Stromverteilerstangen (3) umfasst, die sich Seite an Seite erstrecken und mit einer Isolierung überzogen sind, wobei die Stangen einander zugewandte Bereiche (11a, 11b, 11c) ohne Isolierung umfassen, **dadurch gekennzeichnet, dass** das Muster der Bereiche ohne Isolierung so angepasst ist, dass die Bereiche Mittel zum Führen eines Lichtbogens (A) darstellen, der sich entlang der Stangen ausbreiten kann.

2. System nach Anspruch 1, wobei die Bereiche ohne Isolierung elektrisch leitende Längsstreifen bilden.

3. System nach einem der Ansprüche 1 bis 2, das drei Stangen (3a, 3b, 3c) zum Verteilen von dreiphasiger elektrischer Energie umfasst, die sich Seite an Seite erstrecken, wobei die mittlere Stange (3b) den seitlichen Stangen (3a, 3c) zugewandte seitliche Seiten umfasst, die jede mindestens einen Bereich ohne Isolierung umfassen, und die seitliche Seite der seitlichen Stangen, die der mittleren Stange zugewandt sind, mindestens einen entsprechenden Bereich ohne Isolierung aufweist.

4. System nach einem der Ansprüche 1 bis 3, das eine Vorrichtung zum Fangen von Lichtbögen umfasst, die sich im System ausbreiten, **dadurch gekennzeichnet, dass** es ein Gehäuse (12) umfasst, das im Inneren eine Fangkammer (13) begrenzt und eine vordere Seite (14), durch die ein Bogen, der sich in den Verteilerstangen ausbreitet und entlang der einander zugewandten Bereiche ohne Isolierung geführt wird, in die Kammer eingeführt wird, eine umlaufende Wand (16), eine hintere Wand (15) umfasst, die mit Durchlässen für die Verteilerstangen versehen ist.

## Claims

1. Three-phase electrical energy distribution system, comprising a set of current distribution bars (3) extending side by side and clad with an insulator, the bars including opposing insulator-free zones (11a, 11b, 11c), **characterised in that** the pattern of the insulator-free zones is adapted so that said zones constitute means for guiding an electric arc (A) liable to propagate along the bars.

2. System according to claim 1, wherein the insulator-free zones form electrically conducting longitudinal bands.

3. System according to any of claims 1 to 2, comprising three three-phase electrical energy distribution bars (3a, 3b, 3c) extending side by side, the middle bar (3b) comprising lateral faces turned towards the lateral bars (3a, 3c) each comprising at least one insulator-free zone and the lateral face of the lateral bars that are turned towards the middle bar having at least one corresponding insulator-free zone.

4. System according to any of claims 1 to 3, comprising an electric arc trapping device propagating over the system, **characterised in that** it includes an enclosure (12) internally delimiting a trapping cavity (13) and comprising an anterior face (14) through which an arc propagating in the distribution bars and guided along the opposing insulator-free zones is introduced into the cavity, a peripheral wall (16), a posterior wall (15) provided with passages for the distribution bars.
